# EUROPEAN PATENT APPLICATION

(11) **EP 1 245 626 A1**
(43) Date of publication of application: **02.10.2002**
(21) Application number: 02007256.7
(22) Date of filing: 28.03.2002
(51) Int. Cl.: C08K 7/14, B65D 81/00, E01F 11/00, C08L 81/02

(54) **Composition, container made therefrom as well as paved-road-embeddable information transmittting/receiving apparatus**

(30) Priority: 30.03.2001 JP 2001101921
(71) Applicant: DAINIPPON INK AND CHEMICALS, INC., Itabashi-ku Tokyo (JP); MATSUSHITA ELECTRIC INDUSTRIAL CO., LTD., Kadoma-shi, Osaka-fu (JP)
(72) Inventor: Yudate, Yukihiko, Kobe-shi, Hyogo-ken (JP); Yamamoto, Morikuni, Sakai-chi, Osaka (JP); Tanji, Yoshihiko, Toyono-gun, Osaka (JP); Handa, Satoru, Ikoma-shi, Nara-ken (JP)
(74) Representative: Banzer, Hans-Jörg, Dipl.-Ing.

(57) **Abstract**

An information transmitting/receiving apparatus (10) which can be embedded in a paved road, the apparatus comprising:
a container (2) made of a resin composition comprising a crystalline resin (A) having a melting point within a range from 200 to 400°C and a glass fiber (B) as essential components, and
information transmitting/receiving equipment (1) housed in the container.

## Description

### BACKGROUND OF THE INVENTION

### 1. FIELD OF THE INVENTION

The present invention relates to a resin composition having excellent properties such as heat resistance, chemical resistance and mechanical properties, to a container, made of the resin composition, for a paved-road-embeddable information transmitting/receiving apparatus, to a paved-road-embeddable information transmitting/receiving apparatus using the container, to a method of producing the paved-road-embeddable information transmitting/receiving apparatus, and to a method of embedding information transmitting/receiving equipment.

### 2. DESCRIPTION OF RELATED ART

With recent remarkable progress in information and telecommunications networks, for example, increases in computer processing speeds, the spread of mobile communication equipment such as mobile telephones, innovations in electronic techniques for moving vehicles such as cars, and the spread of car navigation systems, the study of intelligent transportation system (hereinafter referred to as "ITS") that utilize information and telecommunications networks has progressed. Thus, trials of electronic toll collection systems have been made on some toll roads, and furthermore, assistance for safe driving, optimization of traffic management and increasing efficiency in road management have been promoted.

As one kind of ITS, a drift prevention service has been desired to assist in the prevention of vehicles drifting out of traffic lanes due to inattentive driving; a lane-center cruising service has also been desired which allows a vehicle to automatically run along the center of a lane. These services can be realized by enabling the vehicle to detect information transmitting/receiving apparatuses embedded in each traffic lane of a road at regular intervals and to determine the position of the vehicle in the lateral direction in the traffic lane.

### BRIEF SUMMARY OF THE INVENTION

In order to use an information transmitting/receiving apparatus in the state in which it is embedded in a paved road, it is necessary for the apparatus to maintain properties such as water resistance, corrosion resistance to chemicals and salts, and mechanical strength. It is also necessary to endure construction conditions for roads, such as the high temperature of asphalt used for paving.

An object of the present invention is to provide an outer case, which is superior in these properties and also has air-tightness to protect built-in electronic parts, a material therefor, and an information transmitting/receiving apparatus comprising the outer case and information transmitting/receiving equipment housed in the outer case.

To solve the problems described above, the present inventors have intensively researched and have found it effective to form a container for a paved-road-embeddable information transmitting/receiving apparatus using a resin composition comprising a crystalline resin (A) having a melting point within a range from 200 to 400°C and a glass fiber (B) as essential components and to provide a paved-road-embeddable information transmitting/receiving apparatus by housing information transmitting/receiving equipment in the container. Thus, the present invention has been completed.

The resin composition of the present invention for a container for a paved-road-embeddable information transmitting/receiving apparatus comprises a crystalline resin (A) having a melting point within a range from 200 to 400°C and a glass fiber (B) as essential components.

The container for a paved-road-embeddable information transmitting/receiving apparatus is made of a resin composition of the present invention.

The paved-road-embeddable information transmitting/receiving apparatus of the present invention comprises the container of the present invention and information transmitting/receiving equipment housed in the container.

The method of producing a paved-road-embeddable information transmitting/receiving apparatus of the present invention comprises: step 1, forming a container portion used for mounting information transmitting/receiving equipment therein and a cap portion by an injection molding method using the resin composition of the present invention for a container for a paved-road-embeddable information transmitting/receiving apparatus; step 2, mounting the information transmitting/receiving equipment in the container portion obtained in step 1; step 3, joining the cap portion to the container portion in which the information transmitting/receiving equipment is mounted; and step 4, injecting the resin composition to the joined portion formed in step 3, to thereby conduct bonding.

According to the present invention, a resin composition for a container for a paved-road-embeddable information transmitting/receiving apparatus can be provided which has excellent properties such as heat resistance, chemical resistance, and mechanical properties. A paved-road-embeddable information transmitting/receiving apparatus having excellent properties such as heat resistance, corrosion resistance, mechanical strength and air-tightness can be obtained by forming a container for a paved-road-embeddable information transmitting/receiving apparatus using the resin and housing information transmitting/receiving equipment in the container.

### BRIEF DESCRIPTION OF THE SEVERAL VIEWS OF THE DRAWINGS

Fig. 1 is an exploded perspective view showing a paved-road-embeddable information transmitting/receiving apparatus according to one embodiment of the present invention.
Fig. 2 is a view for explaining the case where a vehicle travels on a road in which the paved-road-embeddable information transmitting/receiving apparatus according to one embodiment of the present invention is embedded.
Figs. 3A to 3D are views for explaining one example of a method of producing a paved-road-embeddable information transmitting/receiving apparatus according to one embodiment of the present invention in a sequence of the steps.

### DETAILED DESCRIPTION OF THE INVENTION

The paved-road-embeddable information transmitting/receiving apparatus of the present invention (hereinafter occasionally referred to as the "apparatus") is used in the state of being embedded in a main road such as highway. When this apparatus is embedded in the road, it is commonly exposed to high temperature conditions of about 200°C, which is the temperature at which asphalt is applied. Therefore, it is preferred that the container of the present invention for a paved-road-embeddable information transmitting/receiving apparatus (hereinafter abbreviated to a "container") does not undergo heat deformation even under severe high temperature conditions and does not exert an adverse influence on the information transmitting/receiving equipment housed in the container. It is therefore preferred to use a material having excellent heat resistance, that is, a heat deformation temperature of 200°C or higher in the resin composition of the present invention for the container for a paved-road-embeddable information transmitting/receiving apparatus (hereinafter abbreviated to a "resin composition").

Properties of the material required to the container of this apparatus include: (i) sufficient heat resistance to cause neither warping nor deformation even under temperature conditions in application of asphalt; (ii) excellent chemical resistance to various substances, for example, fuel for moving vehicles (gasoline, light oil) used in typical vehicles, engine oil (engine brake oil, ATF oil) and commonly conveyable chemicals; (iii) properties, which do not cause blocking of electromagnetic waves, because this apparatus is used for the purpose of transmitting/receiving information by means of radio waves (it is actually impossible to use a resin composition containing materials having a very low electrical resistivity, for example, metallic materials, carbon fibers, metal fibers, and metal fillers); and (iv) excellent durability under wide temperature conditions from cold conditions (-30°C) to hot conditions (80°C), and under wide weather conditions.

Required structural properties of this apparatus include: (a) a strong structure which can withstand the weight of large vehicles such as trucks, buses and trailers when embedded in a road; (b) a structure which can maintain air-tightness so that the information transmitting/receiving equipment housed in the container does not cause problems due to water seeping thereinto; and (c) strong fixation of the information transmitting/receiving equipment contained in the container so that the circuit joint portion is not peeled off by vibrations when a vehicle passes.

In the present invention, as a material which can satisfy these material properties and structural properties, a resin composition comprising a crystalline resin (A) having a melting point of 200 to 400°C and a glass fiber (B) as essential components is used as a constituent material of the container of this apparatus.

In the present invention, examples of the crystalline resin (A) as one of essential components include polyarylene sulfide resin, polyether ether ketone resin, LCP (liquid crystal polymer), polyamide resin, polyacetal resin, polybutylene terephthalate resin, and polyethylene terephthalate resin. Among these resins, those having a melting point of 200 to 400°C are preferably used. A polyarylene sulfide resin is particularly preferred. These crystalline resins may be used alone, or two or more kinds thereof may be used in combination.

In the present invention, another essential component is a glass fiber (B). The glass fiber used as another essential component of the resin composition in the present invention is not specifically limited, and commercially available glass fibers can be used. Among glass fibers, E-glass fiber (alkali-free glass fiber) is preferred as an excellent filler in view of improvement in strength and rigidity of the material.

The cross-sectional shape of the glass fiber is not specifically limited, and glass fibers having any cross-sectional shape such as a circle, ellipse, or indeterminate shape can be used. Also the average diameter of the cross-section of the glass fiber is not specifically limited, and commercially available glass fibers having an average diameter of about 5 to 20 µm can be used. Also an L/D (ratio of length to diameter) of the glass fiber is not specifically limited, and those having L/D of about 10 to 5000 can be used.

With respect to the amount of the crystalline resin (A) and that of the glass fiber (B) in the resin composition of the present invention, the crystalline resin (A) is used in an amount within a range from 20 to 80 parts by weight and the glass fiber (B) is used in an amount within a range from 80 to 20 parts by weight based on 100 parts by weight of the total weight of the both. Preferably, the crystalline resin (A) is used in an amount within a range from 30 to 70 parts by weight and the glass fiber (B) is used in an amount within a range from 70 to 30 parts by weight. When the amount of the glass fiber (B) deviates from the range described above, there is a possibility that requisite strength cannot be obtained because of reduced mechanical properties.

The melt viscosity (measuring temperature: 316°C, shear rate: 10⁴ sec⁻¹) of the polyarylene sulfide resin used as the crystalline resin (A) is preferably within a range from 30 to 300 Pa·s, and more preferably from 40 to 200 Pa·s. When the melt viscosity of the polyarylene sulfide resin is not within the range described above, molding conditions in the injection molding are likely to be narrowed.

In the present invention, an inorganic filler (C) other than the glass fiber (B) can be used in combination with the glass fiber (B) to improve the heat resistance, mechanical properties, dimensional stability, crystallization properties, or electrical properties. Examples of the inorganic filler (C) other than the glass fiber (B) include fibrous materials, for example, inorganic fibrous materials such as asbestos fibers, silica fibers, silica alumina fibers, zirconia fibers, boron nitride fibers, silicon nitride fibers, boron fibers, and potassium titanate fibers. Furthermore, granular or powdered non-fibrous materials can be used as the inorganic filler (C). Examples thereof include calcium carbonate, magnesium carbonate, talc, zinc oxide, hydrotalcite, zeolite, glass beads, glass powder, glass balloons, aluminum silicate, calcium silicate, silicon carbide, boron carbide, barium sulfate, calcium sulfate, kaolin, clay, pyrophyllite, bentonite, sericite, mica, nepheline syenite, attapulgite, wollastonite, ferrite, dolomite, antimony trioxide, titanium oxide, alumina, magnesium oxide, magnesium hydroxide, iron oxide, molybdenum disulfide, graphite, gypsum, quartz, silica, and quartz glass. These inorganic fillers can be used alone, or two or more kinds thereof can be used in combination.

If necessary, a surface treating agent or a binding agent is used in combination with these inorganic fillers so as to improve adhesion of the resin composition to the other constituent component and to improve various properties more effectively. Examples of the surface treating agents include epoxysilane coupling agent and aminosilane coupling agent. Examples of the binding agents include epoxy resin and urethane resin.

The amount of the inorganic filler (C) is not specifically limited as long as the object of the present invention is not impaired, and the inorganic filler (C) is preferably used in an amount of 200 parts by weight or less, and more preferably 50 parts by weight or less, based on 100 parts by weight of the total weight of the crystalline resin (A) and the glass fiber (B).

The resin composition of the present invention may further contain a silicone oil (D). The silicone oil (D) used in the present invention is, for example, a polymer having a siloxane bond on a main chain M-[SiM₂-O]ₙ-M (n is a positive integer of 1 or more). In the present invention, a polymer wherein all M groups are methyl groups, or a polymer wherein at most three M groups in a molecule are substituents other than a methyl group and all of other M groups are methyl groups, such as a polydimethylsiloxane compound, is preferred.

By uniformly dispersing the silicone oil (D) in the resin composition, an effect of improving the durability of the molded article under acidic and alkali conditions is produced. To uniformly disperse the silicone oil (D) in the resin composition, the viscosity of the silicone oil (D) is preferably within a range from 10 to 1000 mPa·s (25°C), and more preferably from 10 to 300 mPa·s (25°C).

In the present invention, when the amount of the silicone oil (D) in the resin composition is 0.1 parts by weight or more based on 100 parts by weight of the crystalline resin (A), an effect of improving the durability of the molded article under acidic and alkali conditions can be expected. When the amount is 20 parts by weight or less, the heat resistance, mechanical properties, toughness and impact resistance are not lowered, and therefore it is preferred. To enable the resin composition of the present invention to exert the effect of improving the durability of the molded article even under acidic and alkali conditions while maintaining excellent physical properties, a weight ratio of the crystalline resin (A) to the silicone oil (D) is particularly preferably within a range from 99.7/0.3 to 97.0/3.0 (parts by weight).

In the present invention, for the purpose of improving the impact resistance of the molded article, the resin composition of the present invention can contain an elastomer (E).

As the elastomer (E) used in the present invention, any elastomer can be used as long as it is a component capable of achieving the object of improving the toughness and impact resistance of the resin composition, and examples thereof include various polyolefins, olefin copolymer, styrenebutadiene rubber (SBR), hydrogenated SBR, ethylene-propylene rubber (EPM), maleic anhydride-modified ethylene-propylene rubber (EPDM), butadiene rubber, chloroprene rubber, nitrile rubber, butyl rubber, acrylic rubber, silicone rubber, fluororubber, urethane rubber, and various thermoplastic elastomers. These elastomers may be used alone, or two or more kinds thereof may be used in combination. Among these elastomers, an olefin copolymer is preferable and an ethylene copolymer is particularly preferable.

In the present invention, examples of the ethylene copolymer used as the elastomer (E) include bipolymer containing ethylene and maleic anhydride, or ethylene and a glycidyl ester of α,β-unsaturated acid as a monomer component, and terpolymer obtained by adding α,β-unsaturated carboxylate alkyl ester to these two components. The α,β-unsaturated carboxylate alkyl ester is an unsaturated carboxylic acid having 3 to 8 carbon atoms and is, for example, an alkyl ester of acrylic acid or methacrylic acid. Specific examples thereof include methyl acrylate, ethyl acrylate, n-propyl acrylate, isopropyl acrylate, n-butyl acrylate, t-butyl acrylate, isobuty acrylate, methyl methacrylate, ethyl methacrylate, n-propyl methacrylate, isopropyl methacrylate, n-butyl methacrylate, t-butyl methacrylate, and isobutyl methacrylate. Among these esters, ethyl acrylate, n-butyl acrylate and methyl methacrylate are preferred.

With respect to a component ratio of the crystalline resin (A) to the elastomer (E), the amount of the crystalline resin (A) is within a range from 80 to 99% by weight and the amount of the elastomer (E) is within a range from 20 to 1% by weight, based on the total weight of the crystalline resin (A) and the elastomer (E). When the ratio is within the range described above, good effect of improving the toughness and impact resistance in the resin composition is exerted.

In the present invention, when using the crystalline resin (A) in combination with the elastomer (E), an alkoxysilane compound (F) is further added, preferably. The addition of the alkoxysilane compound makes it possible to noticeably improve the compatibility and uniformity between the crystalline resin (A) such as polyarylene sulfide resin and the elastomer (E) and to maintain high toughness and impact resistance with good stability and reproducibility. The alkoxysilane compound capable of exerting the effect described above is an alkoxysilane compound having a functional group such as an epoxy group, amino group, vinyl group, mercapto group, carboxyl group, hydroxyl group, isocyanate group, amide group, or acyl group, and is widely used as a silane coupling agent. Particularly preferred one is an alkoxysilane compound having at least one functional group selected from the group consisting of epoxy group, amino group and vinyl group, and specific examples thereof include γ-glycidoxypropyltrimethoxysilane, β-(3,4-epoxycyclohexyl)ethyltrimethoxysilane, γ-glycidoxypropyltriethoxysilane, γ-aminopropyltriethoxysilane, γ-aminopropyltrimethoxysilane, γ-aminopropylmethyldiethoxysilane, γ-aminopropylmethyldimethoxysilane, N-β(aminoethyl)-γ-aminopropyltriethoxysilane, N-β(aminoethyl)-γ-aminopropyltrimethoxysilane, N-β(aminoethyl)-γ-aminopropylmethyldiethoxysilane, N-β(aminoethyl)-γ-aminopropylmethyldimethoxysilane, N-phenyl-γ-aminopropyltriethoxysilane, N-phenyl-γ-aminopropyltrimethoxysilane, vinyltriethoxysilane, vinyltrimethoxysilane, and vinyltris(β-methoxyethoxy)silane. These alkoxysilane compounds may be used alone, or two or more kinds thereof may be used in combination.

In the present invention, the amount of the alkoxysilane compound (F) is preferably within a range from 0.1 to 5 parts by weight, and particularly preferably from 0.1 to 2 parts by weight, based on 100 parts by weight of the resin composition. When the amount of the alkoxysilane compound (F) is greater than the range described above, the alkoxysilane compound is likely to be converted into a gas during the injection molding. On the other hand, when the amount is below the range, an addition effect becomes insufficient.

In the resin composition of the present invention, with respect to a weight ratio of the crystalline resin (A) and the elastomer (E) to the alkoxysilane compound (F), (A)/(E) is preferably within a range from 80/20 to 99/1 (weight ratio) and [(A) + (E)]/(D) is preferably within a range from 99.9/0.1 to 80/20 (weight ratio). More preferably, (A)/(E) is within a range from 90/10 to 97/3 (weight ratio) and [(A) + (E)]/(D) is within a range from 99.7/0.3 to 97/3 (weight ratio). When the amount of the alkoxysilane compound is more than the above range based on the total amount of the crystalline resin (A) and the elastomer (E), the alkoxysilane compound is likely to be converted into a gas during the injection molding. On the other hand, when the amount is less then the range, an addition effect becomes insufficient.

The resin composition of the present invention can contain releasants, lubricants, rust inhibitors, crystal nucleating agents, colorants, heat stabilizers, antioxidants, foaming agents, plasticizers and flame retardants as long as the effects of the present invention are not impaired.

The method of preparing the resin composition of the present invention is not specifically limited and, for example, other components are added to a crystalline resin (A) and a glass fiber (B) and the mixture is uniformly kneaded by a conventional heat-kneader. If necessary, raw materials such as other additives are uniformly mixed using a mixer such as a tumbler or a Henschel mixer, and then the mixture is fed in a single- or twin-screw extruder and melt-kneaded at a temperature of 250 to 370°C. The order and method of mixing of raw materials and feeding to the apparatus are not specifically limited. For example, a method of uniformly mixing all raw materials using various mixers and melt-kneading the mixture in a kneading extruder and a method of uniformly mixing a portion of raw materials using various mixers, feeding a glass fiber from a side feeder during melt-kneading, and mixing them may be selected, if necessary.

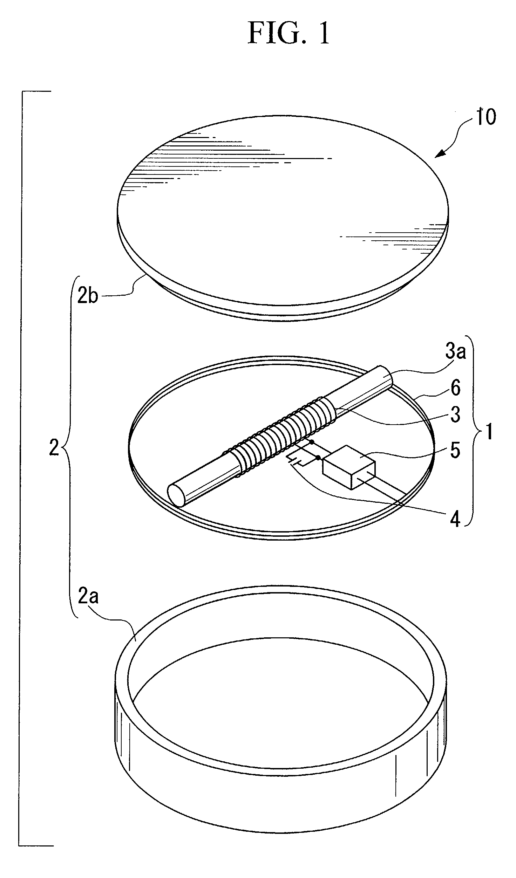

Fig. 1 is a block diagram schematically showing one embodiment of this apparatus. An apparatus 10 of this embodiment is housed so that information transmitting/receiving equipment 1 is included in a container 2.

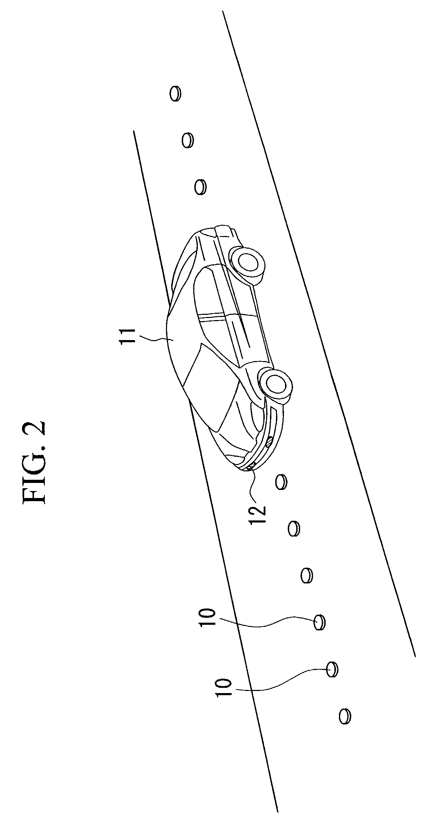

As shown in Fig. 2, plural apparatuses 10 of this embodiment are embedded along the vicinity of a center line of a paved road. Then, trransmitting/receiving of information about the position of a vehicle is conducted between an on-vehicle detecting device 12 mounted to the front of a vehicle 11 and the apparatus 10.

The transmitting/receiving equipment 1 in the present invention is not specifically limited and various equipment can be used. The information transmitting/receiving equipment 1 in this embodiment is constituted in the following manner. That is, an LC resonance circuit is composed of a first toroidal coil 3 formed by winding a coil around a cylindrical core 3a made of a magnetic substance and a condenser 4, whereby the circuit resonates with electromagnetic waves received from the vehicle. The reference symbol 5 in the drawing denotes a frequency converting circuit and converts a frequency of electromagnetic wave received in a resonance circuit composed of the first toroidal coil 3 and the condenser 4 into a different frequency. The reference symbol 6 in the drawing denotes a second toroidal coil and this second toroidal coil 6 emits a frequency signal converted in the frequency converting circuit 5 toward the vehicle.

The container 2 is made of the resin composition of the present invention and is in the form of a column having a hollow portion in this embodiment. The container 2 of this embodiment is composed of a container portion 2a in the form of a closed-end column and cap portion 2b in the form of a disc, and the joined portion of the both is bonded and sealed using a resin composition, which is the same as the constituent material of the container portion 2a and the cap portion 2b, as the adhesive.

The information transmitting/receiving equipment 1 is attached on a substrate (not shown) and this substrate is fixed on the bottom surface of the container portion 2a by a fixing means such as an adhesive or screws.

When the container portion 2a and the cap portion 2b are joined at the joined portion using the resin composition, which is the same as the constituent material of the container portion 2a and the cap portion 2b, as in the above embodiment, a resin composition prepared by mixing a silicone oil (D), in addition to a crystalline resin (A), a glass fiber (B) and an inorganic filler (C), and kneading is preferably used to enhance the air-tightness by increasing the bonding strength of the joined portion.

According to this embodiment, the container 2 does not undergo heat deformation even under high temperature conditions during the application of asphalt and has excellent chemical resistance. The container is also superior in air-tightness and does not block electromagnetic waves, and is also superior in durability and mechanical strength.

Since the information transmitting/receiving equipment 1 is included in the container 2, it can be used in the state where the whole container 2 is embedded in a paved road, thus making it possible to realize an ITS.

The shape of the container is not specifically limited as long as it can house the information transmitting/receiving equipment. For example, the shape may be column, prism, or indeterminate shape, and a column and a prism are particularly preferred.

To produce a paved-road-embeddable information transmitting/receiving apparatus 10 of this embodiment, there is preferably used a method of mounting information transmitting/receiving equipment 1 in a previously formed container portion 2a, and joining a previously formed cap portion 2b to the container portion 2a, thereby integrating them.

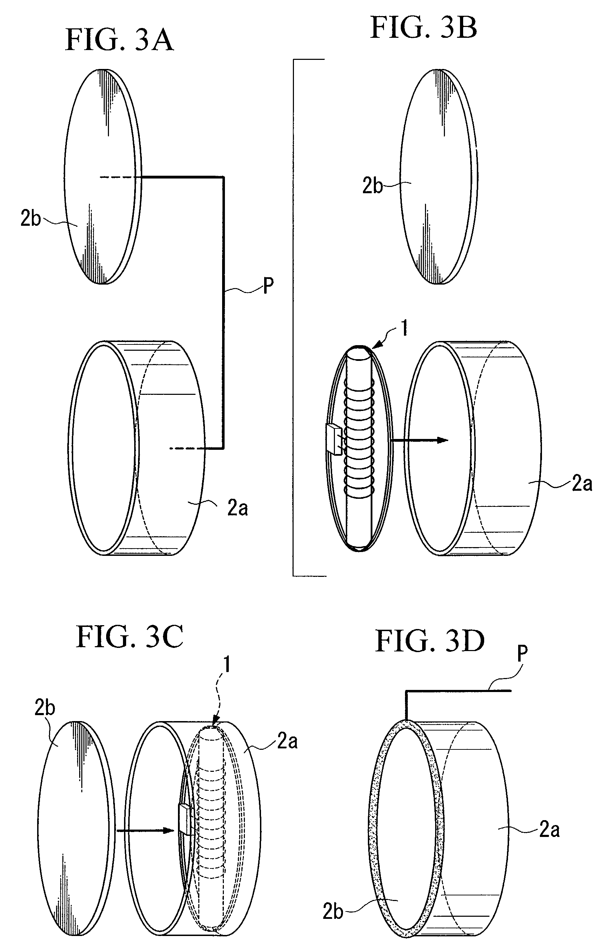

Specifically, as shown in Figs. 3A to 3D, using the resin composition P of the present invention, a container portion 2a and a cap portion 2b are simultaneously formed by the injection molding method (step 1, Fig. 3A) and information transmitting/receiving equipment 1 is mounted in the resulting container portion 2a (step 2, Fig. 3B). Then, a cap portion 2b is joined to the container portion 2a in which the information transmitting/receiving equipment 1 is mounted (step 3, Fig. 3D) and the same resin composition P as that used in step 1 is injected to the joined portion of the container portion 2a and the cap portion 2b, thereby integrating both with bonding (step 4, Fig. 3D).

Steps 1 to 4 are preferably carried out by the DSI method (die slide injection molding method).

In such a method, the injection molding of step 4 is preferably conducted when the temperature of the container portion 2a and the cap portion 2b is 100°C or higher, thereby integrating both. Consequently, the resin composition solidified in step 1 is partially melted again by contacting with the resin composition injected in step 4 and is combined with the resin composition injected in step 4, thereby remarkably enhancing the bonding strength. Therefore, it is made possible to obtain a paved-road-embeddable information receiving apparatus which exhibits superior heat resistance during embedding operations and in a long term, and which is also superior in air-tightness.

The temperature of the container portion 2a and the cap portion 2b on injection molding of step 4 can be controlled so as not to cause deformation of the container portion 2a and the cap portion 2b, but is preferably 250°C or lower.

In step 2, the inter surface of the container portion 2a is preferably provided with a shape, which enables the information transmitting/receiving equipment 1 to be easily fixed, so that the information transmitting/receiving equipment 1 can be simply mounted in the container portion 2a on injection molding. The information transmitting/receiving equipment 1 may not be completely fixed to the side of the container portion 2a and may be fixed on joining of the cap portion 2b.

According to the method of this embodiment, a paved-road-embeddable transmitting/information receiving apparatus can be obtained, which is superior in long-term heat resistance on embedding operation and is also superior in air-tightness. Steps 1 to 4 can be automated and automation makes it possible to improve the productivity and integration of the joined portion of the container portion 2a and the cap portion 2b by injection molding at a temperature within a stable range.

The method of integrating the container portion 2a with the cap portion 2b includes, for example, a method of integrating with fusing using vibration or ultrasonic waves and a method of integrating with bonding using an adhesive (adhesive made of an epoxy resin or a silicone resin), in addition to a method of injecting a resin composition, which is the same as the constituent material of the container portion 2a with the cap portion 2b, to the joined portion. In the case of the method of integrating with bonding using the epoxy resin or silicone resin, the air-tightness of the information transmitting/receiving apparatus is likely to be impaired in view of the heat resistance, long-term heat resistance and chemical resistance of the resin used during the embedding operation. In the case of the method of integrating with fusing, the method restricts equipment. For example, the steps of this method require a special fusing device.

The information transmitting/receiving apparatus can also be produced by separately forming the container portion and the cap portion by injection molding, sufficiently cooling the molded articles, mounting information transmitting/receiving equipment, and joining the cap portion by the method described above.

The process is not limited to the process as in the embodiment described above, and a paved-road-embeddable information transmitting/receiving apparatus of the present invention may be produced by the other process as long as the paved-road-embeddable information transmitting/receiving apparatus with the constitution described above can be obtained.

### Examples

The following Examples and Comparative Examples further illustrate the present invention. In the Examples and Comparative Examples, parts and percentages are by weight unless otherwise specified.

### (Example 1)

A resin composition comprising 60 parts by weight of a polyphenylene sulfide resin (melting point: 280°C, measuring temperature: 316°C, shear rate: 10⁴ sec⁻¹) having a melt viscosity of 150 Pa·s as a crystalline resin (A) and 40 parts by weight of a glass fiber (B) was melt-kneaded using a twin-screw extruder and formed into pellets for injection molding. Using the resulting pellets and an injection molder equipped with a mold having a shape of a container 2 show in Fig. 1, a paved-road-embeddable information transmitting/receiving apparatus was produced in the procedures shown in Figs 3A to 3D.
Step 1: A container portion 2a and a cap portion 2b of a container 2 are simultaneously formed by injection molding.
Step 2: After opening a mold, only the cap portion 2b was removed from the mold and then information transmitting/receiving equipment 1 is mounted in the container portion 2a.
Step 3: The mold is slided, thereby aligning the cap portion 2b to the joined portion of the container portion 2a, and then the mold was closed.
Step 4: The same resin composition as that used in step 1 is injected to the joined portion by injection molding, thereby integrating the container portion 2a with the cap portion 2b to obtain a paved-road-embeddable information transmitting/receiving apparatus 10.

The paved-road-embeddable information transmitting/receiving apparatus obtained in Example 1 was embedded in asphalt at 200°C for 1000 hours. As a result, no deformation was observed in the apparatus. This apparatus was allowed to stand in water at 90°C under a pressure of 5 atmospheres for 1000 hours. As a result, seepage of water at the joined portion was not observed. To test for solvent resistance, this apparatus was dipped in methyl ethyl ketone (MEK) at 23°C for 100 hours. As a result, no change in shape was observed, including the joined portion.

### (Example 2)

A resin composition comprising 40 parts by weight of a polyphenylene sulfide resin (melting point: 280°C, measuring temperature: 316°C, shear rate: 10⁴ sec⁻¹) having a melt viscosity of 50 Pa·s as a crystalline resin (A), 40 parts by weight of a glass fiber (B) and 20 parts by weight of calcium carbonate as an inorganic filler (C) was melt-kneaded using a twin-screw extruder and was formed into pellets for injection molding. Using the resulting pellets, a paved-road-embeddable information transmitting/receiving apparatus was produced in the same manner as in Example 1. In the same manner as in Example 1, the apparatus obtained in Example 2 was subjected to the heat deformation test in asphalt, the standing test in water at 90°C under a pressure of 5 atmospheres for 1000 hours, and the dipping test in MEK at 23°C for 100 hours. As a result, seepage of water at the joined portion was not observed and no changes were observed from exposure MEK.

## Claims

1. A resin composition for a container for a paved-road-embeddable information transmitting/receiving apparatus, comprising a crystalline resin (A) having a melting point within a range from 200 to 400°C and a glass fiber (B) as essential components.

2. The resin composition according to claim 1, wherein the crystalline resin (A) is a polyarylene sulfide resin.

3. The resin composition according to claim 2, wherein a melt viscosity as measured under measuring conditions of 316°C and a shear rate of 10⁴ sec⁻¹ of the polyarylene sulfide resin used as the crystalline resin (A) is within a range from 30 to 300 Pa·s.

4. The resin composition according to any one of claims 1 to 3, further comprising an inorganic filler (C).

5. The resin composition according to any one of claims 1 to 4, further comprising a silicone oil (D).

6. The resin composition according to any one of claims 1 to 5, further comprising an elastomer (E).

7. The resin composition according to claim 6, further comprising an alkoxysilane compound (F).

8. The resin composition according to any one of claims 1 to 7, wherein the amount of the crystalline resin (A) is within a range from 20 to 80 parts by weight, and the amount of the glass fiber (B) is within a range from 80 to 20 parts by weight, based on 100 parts by weight of the total weight of the crystalline resin (A) and the glass fiber (B).

9. A container (2) for a paved-road-embeddable information transmitting/receiving apparatus, which comprises the resin composition of any one of claims 1 to 8.

10. The container (2) according to claim 9, which has an outer shape of a column or prism.

11. The container (2) according to claim 9 or 10, which is formed by an injection molding method.

12. The container (2) according to claim 11, which is formed by a die slide injection molding method.

13. A paved-road-embeddable information transmitting/receiving apparatus (10) comprising the container of any one of claims 9 to 12 and information transmitting/receiving equipment (1) housed in the container (2).

14. A method of producing a paved-road-embeddable information transmitting/receiving apparatus (10), which comprises:
step 1, forming a container portion (2a) used for mounting information transmitting/receiving equipment (1) therein and a cap portion (2b) by an injection molding method using the resin composition of any one of claims 1 to 8,
step 2, mounting the information transmitting/receiving equipment (1) in the container portion (2a) obtained in step 1,
step 3, joining the cap portion (2b) to the container portion (2a) in which the information transmitting/receiving equipment (1) is mounted, and
step 4, injecting the resin composition to the joined portion formed in step 3, thereby bonding them.

15. The method of producing a paved-road-embeddable information transmitting/receiving apparatus (10) according to claim 14, wherein the container portion (2a) for mounting the information transmitting/receiving equipment (1) therein and the cap portion (2b) in step 1 are simultaneously formed.

16. The method of producing a paved-road-embeddable information transmitting/receiving apparatus (10) according to claim 15, wherein steps 1 to 4 are conducted by an injection molder using a die slide injection molding method.

17. The method of producing a paved-road-embeddable information transmitting/receiving apparatus (10) according to any one of claims 14 to 16, wherein injection of the resin composition to the joined portion is conducted in step 4 when the temperatures of the container portion (2a) and the cap portion (2b) are within a range from 100 to 250°C.

18. A method of embedding information transmitting/receiving equipment (1), which comprises the steps of:
preparing an information transmitting/receiving apparatus (10) comprising the container (2) of any one of claims 9 to 12 and information transmitting/receiving equipment (1) housed in the container, and
embedding the information transmitting/receiving apparatus (10) in a paved road.

19. Use of the container (2) of any one of claims 9 to 12 for housing information transmitting/receiving equipment (1) and embedding in a paved road.
